# EUROPEAN PATENT APPLICATION

(11) **EP 3 829 025 A1**
(43) Date of publication of application: **02.06.2021**
(21) Application number: 20184627.6
(22) Date of filing: 08.07.2020
(51) Int. Cl.: H02J 9/06, H02H 3/24, H02H 3/20

(54) **UNINTERRUPTIBLE POWER SUPPLY SYSTEM**

(30) Priority: 29.11.2019 CN 201911205184
(71) Applicant: Delta Electronics, Inc., Taoyuan County 32063 (TW)
(72) Inventor: CHIANG, Ching-Yuan, Taoyuan City 32063 (TW); CHOU, Ming-Wei, Taoyuan City 32063 (TW); CHEN, Chang-Tai, Taoyuan City 32063 (TW)
(74) Representative: 2K Patentanwälte Blasberg Kewitz & Reichel

(57) **Abstract**

An uninterruptible power supply system is connected to a load, and the uninterruptible power supply system includes an output terminal (30), a first switch (11), a second switch (12), a third switch (13), a controller (40), and a protection circuit (70). In a first period that the load is supplied power by the power unit (10), the controller (40) turns on the first switch (11) and the third switch (13) and turns off the second switch (12). In a second period that the load is supplied power by the battery unit (20), the controller (40) turns off the first switch (11) and turns on the second switch (12) and the third switch (13). If at least one of the power unit (10) and the output terminal (30) is abnormal, or if at least one of the battery unit (20) and the output terminal (30) is abnormal, the third switch (13) is turned off by at least one of the protection circuit (70) and the controller (40).

## Description

### BACKGROUND

### Technical Field

The present disclosure relates to an uninterruptible power supply system, and more particularly to an uninterruptible power supply system having a software protection and a hardware protection.

### Description of Related Art

The statements in this section merely provide background information related to the present disclosure and do not necessarily constitute prior art.

Compared with commercial or industrial applications, medical institutions require higher standards for power protection systems. Healthcare facilities must have a stable power supply to make important healthcare devices work. For example, magnetic resonance imaging (MRI), computed tomography (CT) scanners, X-rays, gas analyzers, ultrasound, and imaging devices all require the installation of a UPS system to ensure their operational performance requirements. Since the operation of some medical facilities is related to the patient's life, when the power supply is abnormal and the medical facility cannot be operated, it needs to be immediately known for subsequent processing. Therefore, it is very important to immediately know that the power supply of the uninterruptible power system is abnormal.

### SUMMARY

An object of the present disclosure is to provide an uninterruptible power supply system to solve the problems of the related art.

In order to achieve the object, the uninterruptible power supply system is connected to a load, and the load is supplied power by a power unit or by a battery unit. The uninterruptible power supply system includes an output terminal, a first switch, a second switch, a third switch, a controller, and a protection circuit. The output terminal is coupled to the load. The first switch has a first end and a second end coupled to the power unit. The second switch has a first end and a second end coupled to the battery unit. The third switch has a first end coupled to the first end of the first switch and coupled to the first end of the second switch and a second end coupled to the output terminal. In a first period when the power unit supplies power to the load, the controller turns on the first switch and the third switch and turns off the second switch. In a second period when the battery unit supplies power to the load, the controller turns off the first switch and turns on the second switch and the third switch. In the first period, if at least one of the power unit and the output terminal is abnormal, or in the second period, if at least one of the battery unit and the output terminal is abnormal, the third switch is turned off by at least one of the protection circuit and the controller.

Accordingly, the uninterruptible power supply system is provided to increase the power supply reliability and safety.

It is to be understood that both the foregoing general description and the following detailed description are exemplary, and are intended to provide further explanation of the present disclosure as claimed. Other advantages and features of the present disclosure will be apparent from the following description, drawings and claims.

### BRIEF DESCRIPTION OF DRAWING

The present disclosure can be more fully understood by reading the following detailed description of the embodiment, with reference made to the accompanying drawing as follows:
FIG. 1 is a block diagram of an uninterruptible power supply system according to a first embodiment of the present disclosure.
FIG. 2 is a block diagram of the uninterruptible power supply system according to a second embodiment of the present disclosure.
FIG. 3 is a block circuit diagram of a protection circuit according to the present disclosure.
FIG. 4 is a block circuit diagram of controlling a third switch through a hardware manner and a software manner according to the present disclosure.
FIG. 5 is a block circuit diagram of controlling an abnormality indication unit through the hardware manner according to the present disclosure.
FIG. 6 is a block circuit diagram of controlling the abnormality indication unit through the software manner according to the present disclosure.
FIG. 7 is a block circuit diagram of detecting an output current of an output terminal through the hardware manner and the software manner according to the present disclosure.
FIG. 8 is a circuit diagram of converting the detected output current of the output terminal through the software manner according to the present disclosure.

### DETAILED DESCRIPTION

Reference will now be made to the drawing figures to describe the present disclosure in detail. It will be understood that the drawing figures and exemplified embodiments of present disclosure are not limited to the details thereof.

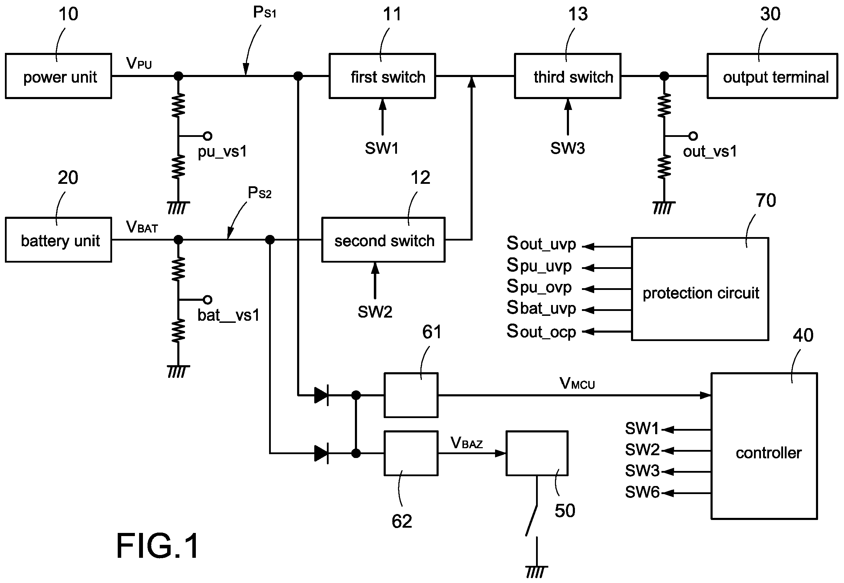

Please refer to FIG. 1, which shows a block diagram of an uninterruptible power supply system according to a first embodiment of the present disclosure. The uninterruptible power supply system uninterruptedly supplies power to an output terminal 30 by a power unit 10 or a battery unit 20. The power unit 10 may be an AC-to-DC converter for converting received AC power (for example, mains power) into DC power. The output terminal 30 may be coupled to a load receiving the DC power. When the received input power (for example, mains power) is normal, the uninterruptible power supply system is powered by the power unit 10. When the input power is abnormal, the uninterruptible power supply system is powered by the battery unit 20. The uninterruptible power supply system includes a first power supply path Ps1, a second power supply path Ps2, a first switch 11, a second switch 12, a third switch 13, a controller 40, and a protection circuit 70.

The first power supply path Ps1 is coupled between the power unit 10 and the output terminal 30, that is, the first power supply path Ps1 is a power supply path for transmitting an output power source V_{PU} of the power unit 10. The second power supply path Ps2 is coupled between the battery unit 20 and the output terminal 30, that is, the second power supply path Ps2 is a power supply path for transmitting an output power source V_{BAT} of the battery unit 20.

The first switch 11 is connected to the first power supply path Ps1, and one end of the first switch 11 is coupled to the power unit 10. The second switch 12 is connected to the second power supply path Ps2, and one end of the second switch 12 is coupled to the battery unit 20. The third switch 13 is connected to the first power supply path Ps1 and the second power supply path Ps2, and one end of the third switch 13 is coupled to the first switch 11 and the second switch 12, and the other end of the third switch 13 is coupled to the output terminal 30. That is, the third switch 13 is connected to a common path of the first power supply path Ps1 and the second power supply path Ps2. The first switch 11, the second switch 12, and the third switch 13 may be semiconductor power switches, such as MOSFET, IGBT, SCR, etc., or may be mechanical switches, such as relay, etc. The present disclosure is not limited by the types of switches described above.

In one embodiment, when the power unit 10 supplies power to the load, the controller 40 turns on the first switch 11 through a first switch signal SW1, turns on the third switch 13 through a third switch signal SW3, and turns off the second switch 12 through a second switch signal SW2. When the battery unit 20 supplies power to the load, the controller 40 turns off the first switch 11 through the first switch signal SW1, turns on the second switch 12 through the second switch signal SW2, and turns on the third switch 13 through the third switch signal SW3. When the load is supplied power by the power unit 10, if the power unit 10 occurs a first abnormal condition or the output terminal 30 occurs a third abnormal condition, or when the load is supplied power by the battery unit 20, if the battery unit 20 occurs a second abnormal condition or the output terminal 30 occurs the third abnormal condition, the third switch 13 is turned off by at least one of the protection circuit 70 or the controller 40.

The first abnormal condition may include an under-voltage abnormality or an over voltage abnormality of the power unit 10, the second abnormal condition may include an under-voltage abnormality of the battery unit 20, and the third abnormal condition may include an under-voltage abnormality or an over current abnormality of the output terminal 30.

In some embodiments, the controller 49 may be a center processing unit (CPU), or other programmable microprocessor, digital signal processor (DSP), programmable controller, application specific integrated circuit (ASIC), programmable logic device (PLD), or other similar devices. The protection circuit 70 is, for example, an analog circuit including a plurality of operational amplifiers, but it is not intended to limit the present disclosure.

The uninterruptible power supply system of the present disclosure is an uninterruptible power supply system protected by software (i.e., the controller 40) and hardware (i.e., the protection circuit 70), and therefore a duplicate protection is provided. In other words, if there is an abnormality in the uninterruptible power supply system, even if one of the controller 40 and the protection circuit 70 is abnormal, the other one can definitely determine the occurrence of the abnormality and immediately make corresponding processing to avoid failing to determine that the back-end load is unable to normally operate resulting in accidents due to abnormal power supply. The uninterruptible power supply system further includes an abnormality indication unit 50 which is coupled to the controller 40 and the protection circuit 70. The abnormality indication unit 50 is used as an indication of occurrence of an abnormal condition when an abnormal condition occurs in the power unit 10, the battery unit 20, or the output terminal 30. The abnormality indication unit 50 may be used for indication by sound, light, or other forms. In one embodiment, the abnormality indication unit 50 may be a buzzer. When an abnormal condition occurs, the buzzer may be controlled to sound to inform the operator or the user.

In the uninterruptible power supply system, the controller 40 and the abnormality indication unit 50 are supplied power by an output power source V_{PU} provided by the power unit 10 or an output power source V_{BAT} provided by the battery unit 20. Specifically, when the power unit 10 supplies power, the output power source V_{PU} provided by the power unit 10 is converted by a first power converter 61 into a voltage V_{MCU}, for example but not limited to 3.3 volts for the controller 40. Also, the output power source V_{PU} provided by the power unit 10 is converted by a second power converter 62 into a voltage V_{BAZ}, for example but not limited to 16 volts for the abnormality indication unit 50. Similarly, when the battery unit 20 supplies power, the output power source V_{BAT} provided by the battery unit 20 is converted by the first power converter 61 into the voltage V_{MCU}, for example but not limited to 3.3 volts for the controller 40. Also, the output power source V_{BAT} provided by the battery unit 20 is converted by the second power converter 62 into the voltage V_{BAZ}, for example but not limited to 16 volts for the abnormality indication unit 50. Therefore, the controller 40 and the abnormality indication unit 50 can be supplied power by the power unit 10 or the battery unit 20 to normally operate.

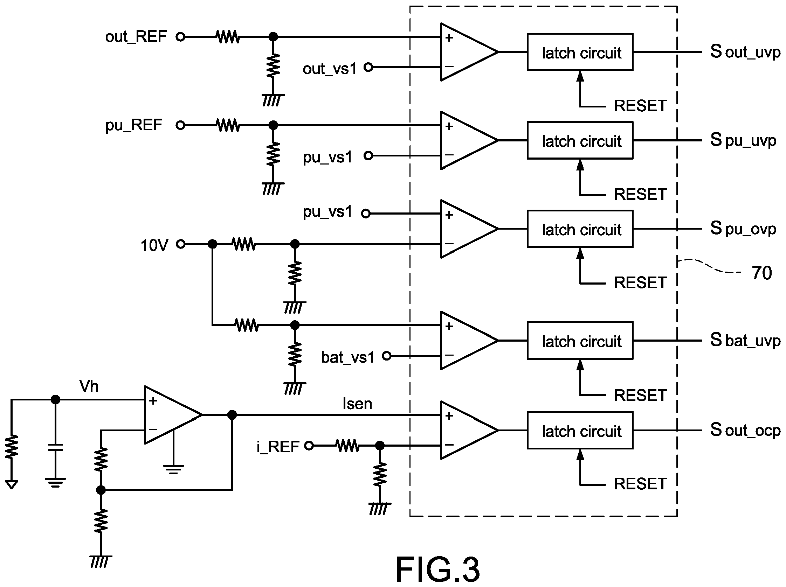

The types of abnormal protection provided by the present disclosure include a first abnormal condition in which an under-voltage abnormality or an over voltage abnormality occurs in the power unit 10, a second abnormal condition in which an under-voltage abnormality occurs in the battery unit 20, and a third abnormal condition in which an under-voltage abnormality or an over current abnormality occurs in the output terminal 30. Please refer to FIG. 3, which shows a block circuit diagram of a protection circuit according to the present disclosure. For the hardware protection manner, the control signal corresponding to the above abnormal condition is directly generated through the hardware circuit, and the third switch 13 is controlled to be turned off so that the power unit 10 or the battery unit 20 is disconnected from the output terminal 30 to isolate damage to the system when abnormal conditions occur. As shown in FIG. 3, the control signals include a second output signal Spu_uvp and a first output signal Spu_ovp respectively corresponding to the under-voltage abnormality and the over voltage abnormality of the power unit 10, a third output signal Sbat_uvp corresponding to the under-voltage abnormality of the battery unit 20, and a fourth output signal Sout_uvp and a fifth output signal Sout_ocp respectively corresponding to the under-voltage abnormality and the over current abnormality of the output terminal 30. The corresponding relationships are listed in the following table.

| sources of abnormality | types of abnormality | corresponding control signals |
|---|---|---|
| power unit | over voltage abnormality | first output signal (Spu_ovp) |
| power unit | under-voltage abnormality | second output signal (Spu _uvp) |
| battery unit | under-voltage abnormality | third output signal (Sbat_ _uvp) |
| output terminal | under-voltage abnormality | fourth output signal (Sout_ uvp) |
| output terminal | over current abnormality | fifth output signal (Sout_ocp) |

As shown in FIG. 3, the control signals corresponding to types of abnormality are generated by the protection circuit 70. Specifically, the under-voltage abnormality of the power unit 10 is detected by a voltage division circuit (shown in FIG. 1) provided at the side of the power unit 10 to obtain a first voltage signal pu_vs1 by dividing the output power source V_{PU}. The first voltage signal pu_vs1 is compared with a second reference voltage pu_REF by one of the comparison units (such as operational amplifiers) of the protection circuit 70. If the first voltage signal pu_vs1 is less than the second reference voltage pu_REF (or a voltage obtained by dividing the second reference voltage pu_REF), the under-voltage abnormality of the power unit 10 is detected. At this condition, the comparison unit outputs a high-level signal to correspondingly activate a latch circuit of the protection circuit 70 so that the protection circuit 70 outputs the high-level second output signal Spu_uvp.

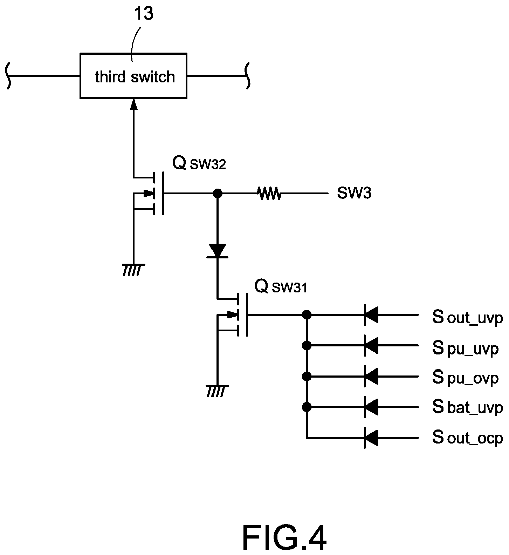

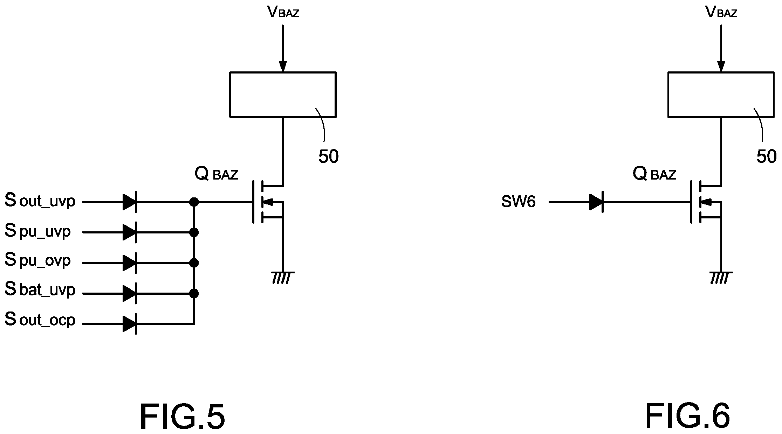

Please refer to FIG. 4, which shows a block circuit diagram of controlling a third switch through a hardware manner and a software manner according to the present disclosure. The high-level second output signal Spu_uvp turns on a first control switch Qsw31 so that a second control switch Qsw32 is correspondingly turned off, and therefore the third switch 13 is turned off. Accordingly, when the under-voltage abnormality of the power unit 10 occurs, the third switch 13 is turned off to prevent the power unit 10 with the under-voltage abnormality from supplying power to the system. In addition, please refer to FIG. 5, which shows a block circuit diagram of controlling an abnormality indication unit through the hardware manner according to the present disclosure. When the under-voltage abnormality of the power unit 10 occurs, the high-level second output signal Spu_uvp simultaneously turns on a third control switch Q_{BAZ} so as to make the abnormality indication unit 50 sound to inform the operator that the under-voltage abnormality of the power unit 10 occurs.

Similarly, the over voltage abnormality of the power unit 10 can be detected by the voltage division circuit (shown in FIG. 1) provided at the side of the power unit 10 to obtain the first voltage signal pu_vs1 and the first voltage signal pu_vs1 is compared with a first reference voltage, such as 10 volts. If the first voltage signal pu_vs1 is greater than the 10-volt first reference voltage (or a voltage obtained by dividing the 10-volt first reference voltage), the over voltage abnormality of the power unit 10 is detected. At this condition, the comparison unit outputs a high-level signal to correspondingly activate a latch circuit of the protection circuit 70 so that the protection circuit 70 outputs the high-level first output signal Spu_ovp to the first control switch Qsw31. For subsequent operations, reference may be made to the previous embodiment, and details are not described herein again.

Similarly, the under-voltage abnormality of the battery unit 20 can be detected by a voltage division circuit (shown in FIG. 1) provided at the side of the battery unit 20 to obtain a second voltage signal bat_vs1. The second voltage signal bat_vs1 is compared with the first reference voltage, such as 10 volts by one of the comparison units of the protection circuit 70. If the second voltage signal bat_vs1 is less than the 10-volt first reference voltage (or a voltage obtained by dividing the 10-volt first reference voltage), the under-voltage abnormality of the battery unit 20 is detected. At this condition, the hardware protection is activated, that is, the comparison unit outputs a high-level signal to correspondingly activate a latch circuit of the protection circuit 70 so that the protection circuit 70 outputs the high-level third output signal Sbat_uvp to the first control switch Qsw31. For subsequent operations, reference may be made to the previous embodiment, and details are not described herein again.

Similarly, the under-voltage abnormality of the output terminal 30 can be detected by a voltage division circuit (shown in FIG. 1) provided at the side of the output terminal 30 to obtain a third voltage signal out_vs1. The third voltage signal out_vs1 is compared with a third reference voltage out_REF by one of the comparison units of the protection circuit 70. If the third voltage signal out_vs1 is less than the third reference voltage out_REF (or a voltage obtained by dividing the third reference voltage out_REF), the under-voltage abnormality of the output terminal 30 is detected. At this condition, the comparison unit outputs a high-level signal to correspondingly activate a latch circuit of the protection circuit 70 so that the protection circuit 70 outputs the high-level fourth output signal Sout_uvp to the first control switch Qsw31. For subsequent operations, reference may be made to the previous embodiment, and details are not described herein again.

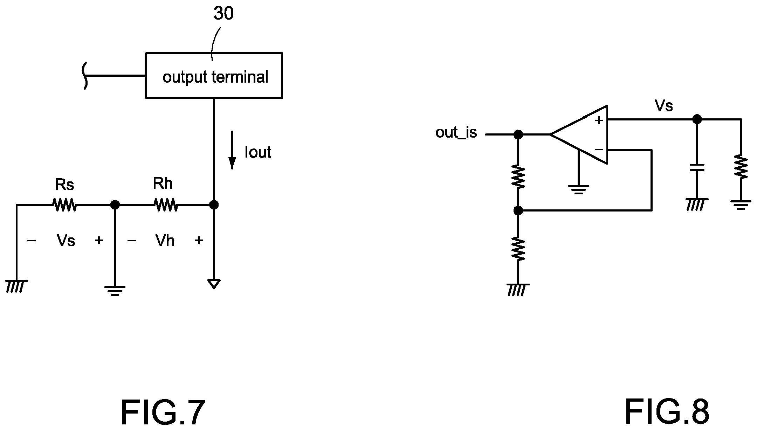

As for the over current abnormality of the output terminal 30 can be detected by a current detection circuit (as shown in FIG. 7, which shows a block circuit diagram of detecting an output current of an output terminal through the hardware manner and the software manner according to the present disclosure). An output current lout flows through a first resistor Rh to generate a voltage Vh and the voltage Vh is provided to the protection circuit 70 shown in FIG. 3. The voltage Vh is amplified by an operational amplifier to output a first current signal Isen. The first current signal Isen is compared with a reference current i_REF by one of the comparison units of the protection circuit 70. If the first current signal Isen is greater than the reference current i_REF, the over current abnormality of the output terminal 30 is detected. At this condition, the hardware protection is activated, that is, the comparison unit outputs a high-level signal to correspondingly activate a latch circuit of the protection circuit 70 so that the protection circuit 70 outputs the high-level fifth output signal Sout_ocp to the first control switch Qsw31. For subsequent operations, reference may be made to the previous embodiment, and details are not described herein again.

In summary, the description of the abnormal conditions of the power unit 10, the battery unit 20, and the output terminal 30 is mainly based on the control signals corresponding to the abnormal types generated by the protection circuit 70 (i.e., the hardware structure) so that the third switch 13 and the abnormality indication unit 50 are controlled to activate the hardware protection to turn off the third switch 13 and make the abnormality indication unit 50 work when any one of abnormal conditions occurs, and therefore the operator can immediately discover system abnormalities and quickly handle them.

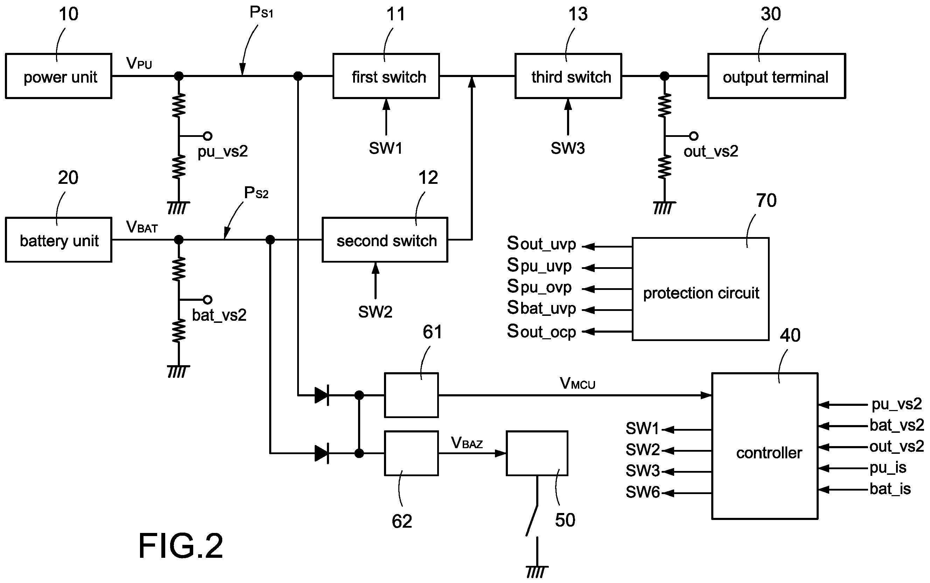

The following is a description of activating software protection (i.e., the controller 40 is controlled) when any one of abnormal conditions occurs. Please refer to FIG. 2, which shows a block diagram of the uninterruptible power supply system according to a second embodiment of the present disclosure. Since the system structure of FIG. 2 is basically the same as that of FIG. 1, and it will not be described again.

As shown in FIG. 2, the controller receives at least one detection signal, and directly outputs the third switch signal SW3 to turn off the third switch 13 and directly outputs the sixth switch signal SW6 to turn on the third control switch Q_{BAZ} so that the abnormality indication unit 50 operates. The detection signals include a first voltage signal pu_vs2 corresponding to the power unit 10, a second voltage signal bat_vs2 corresponding to the battery unit 20, a third voltage signal out_vs2 corresponding to the output terminal 30, and a current signal out_is corresponding to the output terminal 30. The corresponding relationships are listed in the following table.

| sources of abnormality | types of abnormality | corresponding control signals |
|---|---|---|
| power unit | under-voltage abnormality | first voltage signal (pu _vs2) |
| power unit | over voltage abnormality | first voltage signal (pu _vs2) |
| battery unit | under-voltage abnormality | second voltage (bat_vs2) |
| output terminal | under-voltage abnormality | third voltage signal (out_vs2) |
| output terminal | over current abnormality | current signal (out_is) |

Specifically, the under-voltage abnormality of the power unit 10 is detected by a voltage division circuit (shown in FIG. 2) provided at the side of the power unit 10 to obtain a first voltage signal pu_vs2 by dividing the output power source V_{PU}. The first voltage signal pu_vs2 is provided to the controller 40, and the controller 40 compares the first voltage signal pu_vs2 with an inner voltage. If the first voltage signal pu_vs2 is less than a threshold voltage value of the inner voltage, the under-voltage abnormality of the power unit 10 is detected. At this condition, the third switch signal SW3 is outputted to turn off the second control switch Qsw32 (shown in FIG. 4), and therefore the third switch 13 is turned off. Accordingly, when the under-voltage abnormality of the power unit 10 occurs, the third switch 13 is turned off to prevent the power unit 10 with the under-voltage abnormality from supplying power to the system. In addition, please refer to FIG. 6, which shows a block circuit diagram of controlling the abnormality indication unit through the software manner according to the present disclosure. When the under-voltage abnormality of the power unit 10 occurs, the high-level sixth switch signal SW6 simultaneously turns on the third control switch Q_{BAZ} so as to make the abnormality indication unit 50 (such as the buzzer) sound to inform the operator that the under-voltage abnormality of the power unit 10 occurs.

Similarly, the over voltage abnormality of the power unit 10 can be detected by the voltage division circuit (shown in FIG. 2) provided at the side of the power unit 10 to obtain the first voltage signal pu_vs2 by dividing the output power source V_{PU}. The first voltage signal pu_vs2 is provided to the controller 40, and the controller 40 compares the first voltage signal pu_vs2 with an inner voltage. If the first voltage signal pu_vs2 is greater than a threshold voltage value of the inner voltage, the over voltage abnormality of the power unit 10 is detected. At this condition, the third switch signal SW3 is outputted to turn off the second control switch Qsw32, and therefore the third switch 13 is turned off. For subsequent operations, reference may be made to the previous embodiment, and details are not described herein again.

Similarly, the under-voltage abnormality of the battery unit 20 can be detected by a voltage division circuit (shown in FIG. 2) provided at the side of the battery unit 20 to obtain a second voltage signal bat_vs2 by dividing the output power source V_{BAT}. The second voltage signal bat_vs2 is provided to the controller 40, and the controller 40 compares the second voltage signal bat_vs2 with an inner voltage. If the second voltage signal bat_vs2 is less than a threshold voltage value of the inner voltage, the under-voltage abnormality of the battery unit 20 is detected. At this condition, the third switch signal SW3 is outputted to turn off the second control switch Qsw32, and therefore the third switch 13 is turned off. For subsequent operations, reference may be made to the previous embodiment, and details are not described herein again.

Similarly, the under-voltage abnormality of the output terminal 30 can be detected by a voltage division circuit (shown in FIG. 2) provided at the side of the output terminal 30 to obtain a third voltage signal out_vs2. The third voltage signal out_vs2 is provided to the controller 40, and the controller 40 compares the third voltage signal out_vs2 with an inner voltage. If the third voltage signal out_vs2 is less than a threshold voltage value of the inner voltage, the under-voltage abnormality of the output terminal 30 is detected. At this condition, the third switch signal SW3 is outputted to turn off the second control switch Qsw32, and therefore the third switch 13 is turned off. For subsequent operations, reference may be made to the previous embodiment, and details are not described herein again.

As for the over current abnormality of the output terminal 30 can be detected by a current detection circuit (as shown in FIG. 7). An output current lout flows through a second resistor Rs to generate a voltage Vs and the voltage Vs is provided to a conversion circuit shown in FIG. 8, which shows a circuit diagram of converting the detected output current of the output terminal through the software manner according to the present disclosure, and the conversion circuit converts the voltage Vs into a current signal out_is. The current signal out_is is provided to the controller 40, and the controller 40 compares the current signal out_is with an inner current. If the current signal out_is is greater than a critical current value of the inner current, the over current abnormality of the output terminal 30 is detected. At this condition, the third switch signal SW3 is outputted to turn off the second control switch Qsw32, and therefore the third switch 13 is turned off. For subsequent operations, reference may be made to the previous embodiment, and details are not described herein again.

In conclusion, the present disclosure has following features and advantages:
1. The protection mechanism having both a software manner (such as the controller 40) and a hardware manner (such as the protection circuit 70) is used to increase the power supply reliability and safety of the uninterruptible power supply system.
2. An abnormality indication unit, such as the buzzer is used to inform the operator that any one of abnormal conditions occurs so that the operator can immediately discover system abnormalities and quickly handle them.

## Claims

1. An uninterruptible power supply system connected to a load, and the load being supplied power by a power unit (10) or by a battery unit (20), **characterized in that** the uninterruptible power supply system comprising:
an output terminal (30) coupled to the load,
a first switch (11) having a first end and a second end coupled to the power unit (10),
a second switch (12) having a first end and a second end coupled to the battery unit (20),
a third switch (13) having a first end coupled to the first end of the first switch (11) and coupled to the first end of the second switch (12) and a second end coupled to the output terminal (30),
a controller (40), and
a protection circuit (70),
wherein in a first period when the power unit (10) supplies power to the load, the controller (40) turns on the first switch (11) and the third switch (13) and turns off the second switch (12); in a second period when the battery unit (20) supplies power to the load, the controller (40) turns off the first switch (11) and turns on the second switch (12) and the third switch (13); wherein in the first period, if at least one of the power unit (10) and the output terminal (30) is abnormal, or in the second period, if at least one of the battery unit (20) and the output terminal (30) is abnormal, the third switch (13) is turned off by at least one of the protection circuit (70) and the controller (40).

2. The uninterruptible power supply system in claim 1, further comprising:
an abnormality indication unit (50) coupled to the protection circuit (70) and the controller (40),
wherein when the power unit (10), the battery unit (20), or the output terminal (30) occurs an abnormality, the abnormality indication unit (50) operates.

3. The uninterruptible power supply system in claim 1, wherein
the abnormality of the power unit (10) includes an under-voltage abnormality or an over voltage abnormality,
the abnormality of the battery unit (20) includes an under-voltage abnormality, and
the abnormality of the output terminal (30) includes an under-voltage abnormality or an over current abnormality.

4. The uninterruptible power supply system in claim 1, wherein the controller (40) is configured to receive a plurality of detection signals and generates a switch signal to turn on or turn off the third switch (13) according to the detection signals.

5. The uninterruptible power supply system in claim 4, wherein the detection signals comprise a first voltage signal (pu_vs1, pu_vs2) corresponding to the power unit (10), a second voltage signal (bat_vs1, bat_vs2) corresponding to the battery unit (20), and a third voltage signal (out_vs1, out_vs2) and a first current signal (Isen) corresponding to the output terminal (30).

6. The uninterruptible power supply system in claim 1, wherein the protection circuit (70) comprises:
a first comparator configured to compare a first voltage signal (pu_vs1, pu_vs2) corresponding to the power unit (10) with a first reference voltage to generate a first output signal (Spu_ovp), thereby determining whether the power unit (10) occurs an over voltage,
a second comparator configured to compare the first voltage signal (pu_vs1, pu_vs2) with a second reference voltage to generate a second output signal (Spu_uvp), thereby determining whether the power unit (10) occurs an under voltage,
a third comparator configured to compare a second voltage signal (bat_vs1, bat_vs2) corresponding to the battery unit (20) with the first reference voltage to generate a third output signal (Sbat_uvp), thereby determining whether the battery unit (20) occurs an under voltage,
a fourth comparator configured to compare a third voltage signal (out_vs1, out_vs2) corresponding to the output terminal (30) with a third reference voltage to generate a fourth output signal (Sout_uvp), thereby determining whether the output terminal (30) occurs an under voltage, and
a fifth comparator configured to compare a first current signal (Isen) corresponding to the output terminal (30) with a reference current to generate a fifth output signal (Sout_ocp), thereby determining whether the output terminal (30) occurs an over current.

7. The uninterruptible power supply system in claim 6, further comprising:
a fourth switch comprising:
a control end configured to receive the first output signal (Spu_ovp), the second output signal (Spu_uvp), the third output signal (Sbat_uvp), the fourth output signal (Sout_uvp), and the fifth output signal (Sout_ocp), and
a first end, and
a fifth switch comprising:
a control end electrically connected to the first end of the fourth switch, and
a first end electrically connected to the third switch (13).

8. The uninterruptible power supply system in claim 7, wherein the controller (40) is configured to receive a plurality of detection signals to generate a switch signal according to the detection signals, and the switch signal is received through the control end of the fifth switch.

9. The uninterruptible power supply system in claim 8, wherein when the switch signal has a high logic level, or one of the first output signal (Spu_ovp), the second output signal (Spu_uvp), the third output signal (Sbat_uvp), the fourth output signal (Sout_uvp), and the fifth output signal (Sout_ocp) has a high logic level, the fifth switch is turned off so as to turn on the third switch (13).

10. The uninterruptible power supply system in claim 8, further comprising a voltage division generation circuit electrically connected to the output terminal (30), wherein the voltage division generation circuit is configured to generate a first voltage and a second voltage according to an output current of the output terminal (30); the first voltage is corresponding to the first current signal (Isen) and the second voltage is corresponding to a second current signal, and the first voltage and the second voltage are provided to the controller (40) so that the controller (40) is configured to determine whether an over current occurs.
